(19) Europäisches Patentamt
European Patent Office
Office européen des brevets

(11) EP 2 573 838 A1

(12) EUROPEAN PATENT APPLICATION

(43) Date of publication:
27.03.2013 Bulletin 2013/13

(51) Int Cl.:
H01M 2/16 (2006.01)        H01M 2/14 (2006.01)

(21) Application number: 12001646.4

(22) Date of filing: 09.03.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 22.09.2011 PCT/JP2011/071552

(71) Applicant: HITACHI, LTD.
Tokyo
100-8280 (JP)

(72) Inventors:
• Kojima, Eri
Kyoto 618-8525 (JP)
• Furutani, Takahiro
Kyoto 618-8525 (JP)
• Watanabe, Toshiyuki
Kyoto 618-8525 (JP)
• Koyama, Kunihiko
Kyoto 618-8525 (JP)

(74) Representative: Diehl & Partner GbR
Patentanwälte
Augustenstrasse 46
80333 München (DE)

(54) **Separator for electrochemical device, method for producing the same, and electrochemical device**

(57)    A method for producing a separator for an electrochemical device of the invention includes the steps of: applying, to a base material, a separator forming composition containing a monomer or an oligomer and a solvent; irradiating the thus formed coating with an energy ray to form a resin (A) having a cross-linked structure; and drying the coating after formation of the resin (A) to form pores, wherein, as a solvent of the separator forming composition, a solvent (a) having a solubility parameter (SP value) of 8.1 or more and less than 8.9 is used, or a solvent (b) having an SP value of 7 or more and 8 or less and a solvent (c) having an SP value of 8.9 or more and 9.9 or less are used in combination. A separator for an electrochemical device of the invention is produced by the production method of the invention, and an electrochemical device of the invention includes the separator for an electrochemical device of the invention.

FIG. 1B

EP 2 573 838 A1

**Description**

The present invention relates to an electrochemical device that is excellent in reliability and high-temperature safety, a separator that can constitute the electrochemical device, and a method for producing the same.

Electrochemical devices using a non-aqueous electrolyte, typified by non-aqueous electrolyte secondary batteries such as a lithium secondary battery and supercapacitors are characterized by high energy density, and therefore are widely used as power sources for portable appliances such as a mobile phone and a notebook personal computer. The capacity of the electrochemical devices tends to increase with increasing high performance of portable appliances, and it has become a challenge to ensure higher safety

For currently available lithium secondary batteries, a polyolefin-based porous film having a thickness of about 20 to 30 μm, for example, is used as a separator for being interposed between a positive electrode and a negative electrode. However, when producing such a polyolefin-based porous film, a complicated process such as biaxial orientation or extraction of a pore-forming agent is currently used in order to form fine and uniform pores, which results in an increased cost and thus makes the separator expensive.

As the raw material of the separator, polyethylene having a melting point of about 120 to 140°C is used in order to ensure a so-called shutdown effect by which the resin constituting the separator is melted at a temperature less than or equal to the thermal runaway temperature of a battery to close the pores, and the internal resistance of the battery is thereby increased, thus improving the safety of the battery at the time of short circuiting or the like. However, when the battery temperature has further increased after shutdown, for example, the melted polyethylene is likely to flow, which may result in the so-called meltdown that causes damage to the separator. In such a case, the positive and negative electrodes come into direct contact with each other, which may lead to a further temperature increase.

In order to prevent short circuiting caused by such meltdown, methods that use a microporous film or non-woven fabric using a heat-resistant resin as the separator have been proposed. For example, JP 5-335005A discloses a separator using a microporous film of a fully aromatic polyamide, and JP 2000-306568A discloses a separator using a polyimide porous film. Further, JP 9-259856A discloses a separator using a polyamide non-woven fabric, and JP 11-40130A discloses a technique relating to a separator that uses a non-woven fabric using aramid fiber as the base material. However, the use of such heat-resistant microporous films and non-woven fabrics poses the problem of expensive materials, production difficulty, and so forth.

For these reasons, it is desired to achieve a separator having an improved dimensional stability without compromising the productivity in terms of costs and production processes, and develop a technique for improving the safety and reliability of electrochemical devices using such a separator.

The present invention has been achieved in view of the foregoing circumstances, and provides an electrochemical device that is excellent in reliability and high-temperature safety, a separator that can constitute the electrochemical device, and a method for producing the same.

A method for producing a separator for an electrochemical device according to the present invention includes the steps of applying, to a base material, a separator forming composition containing at least: at least one of a monomer or an oligomer that are polymerizable by irradiation with an energy ray; and a solvent; irradiating a coating of the separator forming composition applied to the base material with the energy ray to form a resin (A) having a cross-linked structure; and drying the coating of the separator forming composition after irradiation with the energy ray to form pores, wherein, as the solvent of the separator forming composition, a solvent (a) having a solubility parameter of 8.1 or more and less than 8.9 is used, or a solvent (b) having a solubility parameter of 7 or more and 8 or less and a solvent (c) having a solubility parameter of 8.9 or more and 9.9 or less are used in combination.

A separator for an electrochemical device according to the present invention is produced by the method for producing a separator for an electrochemical device according to the present invention.

Further, an electrochemical device according to the present invention includes a positive electrode, a negative electrode, a separator, and a non-aqueous electrolyte, wherein the separator is the separator for an electrochemical device according to the present invention.

According to the present invention, it is possible to provide an electrochemical device that is excellent in reliability and high-temperature safety, a separator that can constitute the electrochemical device, and a method for producing the same.

FIG. 1A is a plan view schematically showing an example of an electrochemical device (non-aqueous electrolyte secondary battery) according to the present invention;

FIG. 1B is a partial vertical cross-sectional view of FIG. 1A; and

FIG. 2 is a perspective view of the electrochemical device shown in FIGS. 1A and 1B.

A separator for an electrochemical device (hereinafter, simply may be referred to as the "separator") of the present invention is produced by a method of the present invention including: a step (1) of applying, to a base material, a separator forming composition containing at least: at least one of a monomer and an oligomer that are polymerizable by irradiation with an energy ray; and a solvent; a step (2) of irradiating a coating of the separator forming composition applied to the base material with the energy ray to form a resin (A) having a cross-linked structure (hereinafter, simply may be referred to as the "resin (A)"); and a step (3) of drying the coating of the separator forming composition after irradiation with the energy ray to form pores. The separator of the present invention includes the resin (A) formed in the step (2) as its component resin.

The resin (A) of the separator of the present invention includes a cross-linked structure at least in a portion thereof. Therefore, even if the internal temperature of an electrochemical device including the separator of the present invention (an electrochemical device of the present invention) is elevated, the separator tend not to undergo contraction or deformation caused by the resin (A) that has been melted, and thus the shape of the separator can be maintained favorably. Therefore, the occurrence of short circuit between the positive electrode and the negative electrode can be suppressed. Accordingly, the electrochemical device of the present invention including the separator of the present invention exhibits excellent high-temperature safety.

The method of the present invention for producing the separator of the present invention uses a specific solvent for the separator forming composition, and this enables uniform pores to be formed. Accordingly, the separator of the present invention exhibits good lithium ion permeability, and therefore lithium dendrites tend not to be produced in the electrochemical device using this separator, making it possible to favorably suppress the occurrence of micro-short circuit resulting from lithium dendrites during charging and discharging. Therefore, the electrochemical device of the present invention, which includes the separator of the present invention, has favorable charge/discharge characteristics and excellent reliability.

The step (1) of the method of the present invention is the step of applying, to a base material, a separator forming composition containing at least: at least one of a monomer and an oligomer that are polymerizable by irradiation with an energy ray; and a solvent.

The monomer and the oligomer that are polymerizable by irradiation with an energy ray are polymerized in the subsequent step (2) to form the resin (A) having a cross-linked structure.

Specific examples of the resin (A) includes: an acrylic resin formed from an acrylic resin monomer (alkyl(meth) acrylate such as methyl methacrylate and methyl acrylate and a derivative thereof), an oligomer thereof, and a cross-linking agent; a cross-linked resin formed from urethane acrylate and a cross-linking agent; a cross-linked resin formed from epoxy acrylate and a cross-linking agent; and a cross-linked resin formed from polyester acrylate and a cross-linking agent. For any of the above-described resins, a divalent or multivalent acrylic monomer such as dioxane glycol diacrylate, tricyclodecane dimethanol diacrylate, ethylene oxide modified trimethylolpropane triacrylate, dipentaerythritol pentaacrylate, caprolactone modified dipentaerythritol hexaacrylate, and ε-caprolactone modified dipentaerythritol hexaacrylate can be used as the cross-linking agent.

Accordingly, when the resin (A) formed in the step (2) is the above-described acrylic resin, the above examples of the acrylic resin monomer and a cross-linking agent can be used as the monomer that is polymerizable by irradiation with an energy ray for the separator forming composition used in the step (1) (hereinafter, simply referred to as the "monomer"). For example, an oligomer of the above examples of the acrylic resin monomer can be used as the oligomer that is polymerizable by irradiation with an energy ray for the separator forming composition used in the step (1) (hereinafter, simply referred to as the " oligomer").

Furthermore, when the resin (A) formed in the step (2) is the cross-linked resin formed from urethane acrylate and a cross-linking agent, the above examples of cross-linking agent and the like can be used as the monomer of the separator forming composition used in the step (1), and urethane acrylate can be used as the oligomer of the separator forming composition used in the step (1).

On the other hand, when the resin (A) formed in the step (2) is the cross-linked resin formed from epoxy acrylate and a cross-linking agent, the above examples of cross-linking agent and the like can be used as the monomer of the separator forming composition used in the step (1), and epoxy acrylate can be used as the oligomer of the separator forming composition used in the step (1).

Furthermore, when the resin (A) formed in the step (2) is the cross-linked resin formed from polyester acrylate and a cross-linking agent, the above examples of cross-linking agent and the like can be used as the monomer of the separator forming composition used in the step (1), and polyester acrylate can be used as the oligomer of the separator forming composition used in the step (1).

Across-linked resin derived from an unsaturated polyester resin that is formed from a mixture of a styrene monomer and an ester composition produced from condensation polymerization between a divalent or multivalent alcohol and dicarboxylic acid; a resin formed from polyfunctional epoxy, polyfunctional oxetane, or a mixture thereof and various polyurethane resins produced by reaction between polyisocyanate and polyol can be used as the resin (A).

Accordingly, the resin (A) formed in the step (2) is the cross-linked resin derived from an unsaturated polyester resin, a styrene monomer can be used as the monomer of the separator forming composition used in the step (1), and the above-described ester composition can be used as the oligomer of the separator forming composition used in the step (1).

When the resin (A) is the resin formed from polyfunctional epoxy, polyfunctional oxetane, or a mixture thereof, examples of the polyfunctional epoxy include ethylene glycol diglycidyl ether, 1,6-hexanediol diglycidyl ether, neopentylglycol diglycidyl ether, glycerol polyglycidyl ether, sorbitol glycidyl ether, 3,4-epoxycyclohexenylmethyl 3',4'-epoxycyclohexenecarboxylate, and 1,2:8,9 diepoxylimonene. Examples of the above polyfunctional oxetane include 3-ethyl-3{[(3-ethyloxetane-3-yl)methoxy]methyl}oxetane, and xylene bisoxetane.

Accordingly, when the resin (A) formed in the step (2) is the resin formed from polyfunctional epoxy, polyfunctional oxetane, or a mixture thereof, the above examples of polyfunctional epoxy and polyfunctional oxetane can be used as the monomer of the separator forming composition used in the step (1).

When the resin (A) is one of various type of polyurethane resins that are produced by reaction between polyisocyanate and polyol, examples of polyisocyanate include hexamethylene diisocyanate, phenylene diisocyanate, toluene diisocyanate (TDI), 4,4'-diphenyl methane diisocyanate (MDI), isophorone diisocyanate (IPDI), and bis-(4-isocyanato cyclohexyl)methane. Examples of polyol include polyether polyol, polycarbonate polyol, and polyester polyol.

Accordingly, when the resin (A) formed in the step (2) is one of various polyurethane resins that are produced by reaction between polyisocyanate and polyol, the above examples of polyisocyanate can be used as the monomer of the separator forming composition used in the step (1), and the above examples of polyol can be used as the oligomer of the separator forming composition used in the step (1).

When forming each of the above examples of the resin (A), a monofunctional monomer such as isobornyl acrylate, methoxy polyethylene glycol acrylate, and phenoxy polyethylene glycol acrylate can be used in combination. Accordingly, when the resin (A) formed in the step (2) includes a structural portion derived from any of these monofunctional monomers, the above examples of the monofunctional monomer can be used as the monomer in combination with the above examples of the other monomers and oligomers in the separator forming composition used in the step (1).

Usually, an energy ray-sensitive polymerization initiator is included in the separator forming composition. Specific examples of the polymerization initiator includes bis(2,4,6-trimethylbenzoyl)phenylphosphine oxide, 2,2-dimethoxy-2-phenylacetophenone, and 2-hydroxy-2-methylpropiophenone. The amount of the polymerization initiator used is preferably 1 to 10 parts by mass with respect to 100 parts by mass of the total amount of the monomer and the oligomer (in the case of using only one of the monomer and the oligomer, the amount thereof).

As the solvent of the separator forming composition, a solvent (a) having a solubility parameter (hereinafter, referred to as an "SP value") of 8.1 or more and less than 8.9 is used, or a solvent (b) having an SP value of 7 or more and 8 or less and a solvent (c) having an SP value of 8.9 or more and 9.9 or less are used in combination.

The solvent (a) favorably can dissolve the monomer and the oligomer included in the separator forming composition, and therefore the coating formed by application of the separator forming composition to the base material exhibits better uniformity, which in turn improves the uniformity of the separator. Further, the solvent (a) has poor compatibility with the resin (A) formed in the step (2), and therefore is dispersed as fine droplets in the coating after formation of the resin (A). Accordingly, upon removal of the solvent (a) by drying in the subsequent step (3), a large number of fine and uniform pores are formed in the separator. Thus, the separator produced by the method of the present invention has excellent lithium ion permeability, and has excellent short circuit resistance during charging of the electrochemical device.

That is, when the SP value of the solvent (a) of the separator forming composition is too low, the solvent (a) cannot dissolve the monomer and the oligomer in the separator forming composition favorably. Accordingly, the coating formed by application of the separator forming composition to the base material exhibits a decreased uniformity, making it impossible to form a uniform separator. On the other hand, when the SP value of the solvent (a) of the separator forming composition is too high, the resin (A) formed in the step (2) swells or is dissolved, and as a result, many of the pores of the separator are closed. In an electrochemical device including such a separator, electric current is localized in the portion with few pores of the separator, and therefore lithium dendrites tend to be formed and short circuit is likely to occur.

Specific examples of the solvent (a) include cyclohexane (SP value: 8.2), s-butyl acetate (SP value: 8.2), dichlorofluoromethane (SP value: 8.3), methyl isobutyl ketone (MIBK, SP value: 8.4), isopropyl acetate (SP value: 8.4), butyl acetate (SP value: 8.5), dipentene (SP value: 8.5), 2-heptanone (SP value: 8.5), carbon tetrachloride (SP value: 8.6), propylbenzene (SP value: 8.6), pentylamine (SP value: 8.7), xylene (SP value: 8.8), and p-chlorotoluene (SP value: 8.8).

In the case of using the solvent (b) and the solvent (c) in combination, the solvent (c), which has good compatibility with the monomer and the oligomer, can dissolve the monomer and the oligomer farovably. Therefore, the coating formed by application of the separator forming composition to the base material exhibits better uniformity, which in turn improves the uniformity of the separator. On the other hand, the solvent (b) has poor compatibility with the resin (A) formed in the step (2), and therefore is dispersed as fine droplets in the coating after formation of the resin (A). Accordingly, upon removal of the solvent (b) together with the solvent (c) by drying in the subsequent step (3), a large number of fine and uniform pores are formed in the separator. Thus, the separator produced by the method of the present invention, which uses the solvent (b) and the solvent (c) in combination, also has excellent lithium ion permeability, and has excellent short circuit resistance during charging of the electrochemical device.

That is, when the SP value of the solvent (b) and the solvent (c) of the separator forming composition is too low, these solvents cannot dissolve the monomer and the oligomer in the separator forming composition favorably. Accordingly, the coating formed by application of the separator forming composition to the base material exhibits a decreased uniformity, making it impossible to form a uniform separator. On the other hand, when the SP value of the solvent (b) and the solvent (c) of the separator forming composition is too high, the resin (A) formed in the step (2) swells or is dissolved, and as a result, many of the pores of the separator are closed. In an electrochemical device including such a separator, electric current is localized in the portion with few pores of the separator, and therefore lithium dendrites tend to be formed and short circuit is likely to occur.

Specific examples of the solvent (b) include 1-nitro octane (SP value: 7.0), pentane (SP value: 7.0), diethyl ether (SP value: 7.4), octane (SP value: 7.6), isoamyl acetate (SP value: 7.8), diisobutyl ketone (SP value: 7.8), methyl decanoate (SP value: 8.0), and diethylamine (SP value: 8.0).

Specific examples of the solvent (c) include toluene (SP value: 8.9), butyl aldehyde (SP value: 9.0), ethyl acetate (SP value: 9.0), ethyl acetate (SP value: 9.1), tetrahydrofuran (SP value: 9.1), benzene (SP value: 9.2), methyl ethyl ketone (SP value: 9.3), benzaldehyde (SP value: 9.4), chlorobenzene (SP value: 9.5), ethylene glycol monobutyl ether (SP value: 9.5), 2-ethyl hexanol (SP value: 9.5), methyl acetate (SP value: 9.6), dichloroethyl ether (SP value: 9.8), 1,2-dichloroethane (SP value: 9.8), acetone (SP value: 9.8), and cyclohexanone (SP value: 9.9).

In the case of using the solvent (b) and the solvent (c) in combination as the solvent of the separator forming composition, the ratio $V_{sc}/V_{sb}$ of the volume $V_{sb}$ of the solvent (b) to the volume $V_{sc}$ of the solvent (c) is preferably 0.05 to 0.7.

Note that even if a solvent having a greater SP value than that of the solvent (a) is used in place of the solvent (a), it is possible to produce a separator having fine and uniform pores, for example, by inclusion of a material assisting pore formation such as inorganic fine particles in the separator forming composition. However, according to the method of the present invention, the use of a solvent having an appropriate SP value as the solvent used for the separator forming composition makes it possible to produce a separator having a large number of fine and uniform pores without using such a material assisting pore formation.

The separator of the present invention also may include inorganic fine particles (B). Inclusion of the inorganic fine particles (B) can achieve a further improvement in the strength and the dimensional stability of the separator.

To produce a separator containing inorganic fine particles (B) by the method of the present invention, the inorganic fine particles (B) may be included in the separator forming composition.

Specific examples of the inorganic fine particles (B) include fine particles of inorganic oxides such as iron oxide, silica ($SiO_2$), alumina ($Al_2O_3$), titania ($TiO_2$), and $BaTiO_3$; fine particles of inorganic nitrides such as aluminum nitride and silicon nitride; fine particles of hardly soluble ionic crystals such as calcium fluoride, barium fluoride, and barium sulfate; fine particles of covalent crystals such as silicon and diamond; and fine particles of clays such as monmorillonite. Here, the inorganic oxide fine particles may be fine particles of materials derived from mineral resources such as boehmite, zeolite, apatite, kaolin, mullite, spinel, olivine, and mica or artificial products thereof. The inorganic fine particles (B) may be electrically insulating particles obtained by covering, with a material having electrical insulation (e.g., any of the above inorganic oxides), the surface of a conductive material, exemplified by conductive oxides such as metal, $SnO_2$ and indium tin oxide (ITO) and carbonaceous materials such as carbon black and graphite. The above examples of the inorganic fine particles may be used alone or in combination of two or more. Among the above examples of inorganic fine particles, inorganic oxide fine particles are more preferable, and alumina, titania, silica, and boehmite are even more preferable.

The average particle diameter of the inorganic fine particles (B) is preferably 0.001 $\mu$m or more, more preferably 0.1 $\mu$m or more, and is preferably 15 $\mu$m or less, more preferably 1 $\mu$m or less. Note that the average particle diameter of the inorganic fine particles (B) can be defined as a number average particle diameter measured by dispersing the inorganic fine particles (B) in a medium that does not dissolve the inorganic fine particles (B), for example, using a laser scattering particle size distribution analyzer (e.g., "LA-920" manufactured by Horiba, Ltd.) (the values of the average particle diameter of the inorganic fine particles (B) in the examples, described below, were calculated by this method).

The configuration of the inorganic fine particles (B) may be, for example, a nearly spherical shape, or a tabular or fibrous shape. However, from the viewpoint of improving the short circuit resistance of the separator, the inorganic fine particles (B) are preferably tabular particles or particles having a secondary particle structure formed by agglomeration of primary particles. Particularly, particles having a secondary particle structure formed by agglomeration of primary particles are more preferable in terms of the improvement of the porosity of the separator. Typical examples of the tabular particles and secondary particles include tabular alumina and tabular boehmite, alumina in the form of secondary particles, and boehmite in the form of secondary particles.

In the case of including the inorganic fine particles (B) in the separator of the present invention, the ratio $V_A/V_B$

of the volume $V_A$ of the resin (A) to the volume $V_B$ of the inorganic fine particles (B) is preferably 0.6 or more, more preferably 3 or more. When the $V_A/V_B$ is in the above range of values, the occurrence of defects such as cracks can be suppressed more favorably by the effect of the resin (A), which is highly flexible, even if the separator is bent as in the case where the separator constitutes a wound electrode group (in particular, a wound electrode group having a flat transverse section that is used for prismatic batteries and the like), for example. Accordingly, it is possible to achieve a separator having better short circuit resistance.

In the case of including the inorganic fine particles (B) in the separator of the present invention, the $V_A/V_B$ is preferably 9 or less, more preferably 8 or less. When the $V_A/V_B$ is in the above range of values, the effect of improving the separator strength and the effect of improving the dimensional stability of the separator by inclusion of the inorganic fine particles (B) can be achieved more favorably.

Furthermore, in the case of including the inorganic fine particles (B) in the separator of the present invention, the separator preferably consists primarily of the resin (A) and the inorganic fine particles (B) when a porous substrate composed of a fibrous material (C), described below, is not used. Specifically, the total volume $(V_A+V_B)$ of the resin (A) and the inorganic fine particles (B) is preferably 50 vol% or more, more preferably 70 vol% or more (also may be 100 vol%), in the entire volume (the volume excluding the pore portion: Hereinafter, the same applies to the volume ratio of the components of the separator.) of the components of the separator. On the other hand, in the case of using a porous substrate composed of a fibrous material (C), described below, for the separator of the present invention, the total volume $(V_A+V_B)$ of the resin (A) and the inorganic fine particles (B) is preferably 20 vol% or more, more preferably 40 vol% or more, in the entire volume of the components of the separator.

Accordingly, in the case of including the inorganic fine particles (B) in the separator forming composition, it is desirable that the amount of the inorganic fine particles (B) to be added is adjusted such that the $V_A/V_B$ satisfies the above values and the $V_A+V_B$ satisfies the above values in a produced separator.

Furthermore, a fibrous material (C) can be included in the separator of the present invention. Inclusion of the fibrous material (C) also can achieve a further improvement in the strength and the dimensional stability of the separator.

To produce a separator including the fibrous material (C) by the method of the present invention, the fibrous material (C) may be included in the separator forming composition, or a porous substrate formed from the fibrous material (C) may be used as a base material to which the separator forming composition is applied.

There is no particular limitation with respect to the properties of the fibrous material (C) as long as the fibrous material (C) has a heat-resistant temperature (a temperature at which no deformation is observed by visual inspection) of 150°C or higher, has electrical insulation, is electrochemically stable, and is stable in the non-aqueous electrolyte of an electrochemical device and a solvent used for production of the separator. The "fibrous material" as used herein has an aspect ratio (length in the longitudinal direction/width (diameter) in the direction perpendicular to the longitudinal direction) of 4 or more. The aspect ratio is preferably 10 or more.

Examples of specific constituents of the fibrous material (C) include: cellulose and its modified product (e.g., carboxymethyl cellulose (CMC) and hydroxypropyl cellulose (HPC)); resins such as polyolefin (e.g., polypropylene (PP) and a propylene copolymer), polyester (e.g., polyethylene terephthalate (PET), polyethylene naphthalate (PEN), and polybutylene terephthalate (PBT)), polyacrylonitrile (PAN), aramide, polyamide imide, and polyimide; and inorganic oxides such as glass, alumina, zirconia, and silica. Two or more of these constituents may be included. The fibrous material (C) also may contain various additives (e.g., an antioxidant in the case of a resin fibrous material) as needed.

The diameter of the fibrous material (C) may be less than or equal to the thickness of the separator, and is preferably 0.01 to 5 $\mu$m, for example. When the fiber diameter is too large, entanglement of the fibrous material is insufficient. Accordingly, when a sheet material is formed of the fibrous material to configure the separator substrate, the strength of the separator substrate is reduced, thus making handling difficult. When the diameter is too small, the pores of the separator become too small, which may reduce the effect of improving the lithium ion permeability.

The fibrous material (C) is present in the separator such that the angle between the surface of the separator and the major axis (i.e., the axis in the longitudinal direction) of the fibrous material (C) is, on average, preferably 30° or less, more preferably 20° or less.

For example, the content of the fibrous material (C) in the separator is preferably 10 vol% or more, more preferably 20 vol% or more, in the entire components. Note that the content of the fibrous material (C) in the separator is preferably 70 vol% or less, more preferably 60 vol% or less. However, in the case of using the fibrous material (C) as a porous substrate, described below, the content is preferably 90 vol% or less, more preferably 80 vol% or less.

Accordingly, in the case of including the fibrous material (C) in the separator forming composition, it is desirable that the amount of the fibrous material (C) to be added is adjusted or the amount of the separator forming composition to be applied to the surface of the porous substrate composed of the fibrous material (C) such that the content of the fibrous material (C) satisfies the above values in a produced separator.

The separator of the present invention preferably has the shut-down function from the viewpoint of further enhancing the safety of an electrochemical device for which the separator is used. The separator can be provided with the shut-down function, for example, by inclusion of a thermoplastic resin (hereinafter, referred to as the "heat-melting resin (D)") having a melting point of 80°C or higher and 140°C or lower, or inclusion of a resin (hereinafter, referred to as the "heat-swelling resin (E)") that swells by absorbing a liquid non-aqueous electrolyte (a non-aqueous electrolyte, hereinafter, may simply be referred to as the "electrolyte") when heated, and whose degree of swelling increases with increasing temperature. In a separator that has been provided with the shut-down function by the above-described methods, when heat is generated in the electrochemical device, the heat-melting resin (D) melts and close the pores of the separator, or the heat-swelling resin (E) absorbs the non-aqueous electrolyte (liquid non-aqueous electrolyte) in the electrochemical device, causing the shutdown that suppresses the progress of electrochemical reactions.

To produce a separator containing the heat-melting resin (D) and the heat-swelling resin (E) by the method of the present invention, the heat-melting resin (D) and the heat-swelling resin (E) may be included in the separator forming composition.

As the heat-melting resin (D), it is preferable to use a resin that has a melting point of 80°C or higher and 140°C or lower, namely, a melting temperature measured with a DSC in accordance with Japanese Industrial Standards (JIS) K 7121, but has electrical insulation, is stable in the non-aqueous electrolyte of an electrochemical device and a solvent used for production of the separator. Further, it is preferable to use an electrochemically stable material that cannot be easily oxidized or reduced in the operating voltage range of the electrochemical device. Specific examples of the heat-melting resin (D) include polyethylene (PE), polypropylene (PP), copolymerized polyolefin, a polyolefin derivative (such as chlorinated polyethylene), a polyolefin wax, a petroleum wax, and a carnauba wax. Examples of the copolymerized polyolefin include a copolymer of ethylene-vinyl monomer, more specifically, an ethylene-propylene copolymer, EVA, and an ethylene-acrylic acid copolymer such as an ethylene-methyl acrylate copolymer or an ethylene-ethyl acrylate copolymer. It is desirable that the structural unit derived from ethylene in the copolymerized polyolefin is 85 mol % or more. Further, it is possible to use polycycloolefin and the like. The above examples of the heat-melting resin (D) may be used alone or in combination of two or more.

Among the above-listed materials, PE, a polyolefin wax, PP, or EVA containing 85 mol% or more of a structural unit derived from ethylene preferably can be used as the heat-melting resin (D). The heat-melting resin (D) also may contain various additives (e.g., an antioxidant) as needed, which are to be added to the resin.

As the heat-swelling resin (E), usually, a resin can be used that absorbs no electrolyte or only a limited amount of electrolyte in a temperature range (about 70°C or lower) in which batteries are used, and therefore has a degree of swelling lower than or equal to a prescribed degree, but when heated to a required temperature (Tc), significantly swells by absorbing an electrolyte and whose degree of swelling increases with increasing temperature. In an electrochemical device using a separator containing the heat-swelling resin (E), flowable electrolyte that is not absorbed by the heat-swelling resin (E) is present in the pores of the separator at temperatures lower than Tc, and therefore the lithium ion conductivity inside the separator increases, making it possible to achieve an electrochemical device having favorable load characteristics. On the other hand, when heated to a temperature higher than or equal to the temperature at which the property that the degree of swelling increases with increasing temperature (hereinafter, occasionally may be referred to as the "heat-swelling property") is exhibited, the heat-swelling resin (E) significantly swells by absorbing the electrolyte contained in the device, and the swelled heat-swelling resin (E) closes the pores of the separator, and at the same time, the amount of flowable electrolyte decreases, leading to electrolyte deficiency in the electrochemical device. This suppresses the reaction between the electrolyte and the active materials, thus further increasing the safety of the electrochemical device. Moreover, if a high temperature exceeding Tc is reached, the above-described electrolyte deficiency advances further by the heat-swelling property to suppress the battery reaction even further, which in return makes it possible to further increase the high-temperature safety.

The temperature at which the heat-swelling resin (E) starts exhibiting the heat-swelling property is preferably 75°C or higher. This is because, by setting the temperature at which the heat-swelling resin (E) starts exhibiting the heat-swelling property to 75°C or higher, the temperature (Tc) at which the internal resistance of the device increases due to a significant decrease in the Li ion conductivity can be set to about 80°C or higher. On the other hand, the higher the lower limit of the temperature at which the heat-swelling property is exhibited, the higher the Tc of the separator becomes. Therefore, in order to set the Tc to about 130°C or lower, the temperature at which the heat-swelling resin (E) starts exhibiting the heat-swelling property is preferably 125°C or lower, more preferably 115°C or lower. When the temperature at which the heat-swelling property is exhibited is too high, the effect of improving the safety of the electrochemical device may not be ensured sufficiently because the thermal runaway reaction of the active materials inside the device cannot be suppressed sufficiently. When the temperature at which the heat-swelling property is exhibited is too low, the lithium ion conductivity may be reduced excessively in a normal working temperature range (about 70°C or lower) of the electrochemical device.

It is desirable that the heat-swelling resin (E) absorbs electrolyte as little as possible and undergoes little swelling at a temperature lower than the temperature at which the heat-swelling property is exhibited. This is because the electrochemical device exhibits more favorable characteristics such as load characteristics in the working temperature range, including, for example, at room temperature of the electrochemical device, when the electrolyte is retained in a flowable state in the pores of the separator than when it is incorporated into the heat-swelling resin (E).

The amount of the electrolyte absorbed by the heat-swelling resin (E) at room temperature (25°C) can be evaluated using the degree of swelling $B_R$ representing a volume change of the heat-swelling resin (E) that is defined by Formula (1) below.

$$B_R = (V_0/V_i) - 1 \qquad (1)$$

where Vo represents the volume ($cm^3$) of the heat-swelling resin (E) after being immersed in an electrolyte at 25°C for 24 hours, and $V_i$ represents the volume ($cm^3$) of the heat-swelling resin (E) before being immersed in the electrolyte.

In the case of including the heat-swelling resin (E) in the separator of the present invention, the degree of swelling $B_R$ of the heat-swelling resin (E) at room temperature (25°C) is preferably 1 or less. It is desirable that the swelling as the result of absorbing electrolyte is small, or in other words, $B_R$ has a small value as close as possible to 0. It is also desirable that at temperatures lower than the temperature at which the heat-swelling property is exhibited, the change in the degree of swelling with temperature is as small as possible.

On the other hand, as the heat-swelling resin (E), a resin can be used that absorbs an increased amount of electrolyte when heated to a temperature equal to or higher than the lower limit of the temperature at which the heat-swelling property is exhibited, and whose degree of swelling increases with temperature in a temperature range in which the heat-swelling property is exhibited. For example, it is preferable to use a heat-swelling resin whose degree of swelling $B_T$ that is measured at 120°C and defined by Formula (2) below is 1 or more.

$$B_T = (V_1/V_0) - 1 \qquad (2)$$

wherein Vo represents the volume ($cm^3$) of the heat-swelling resin (E) after being immersed in an electrolyte at 25°C for 24 hours, and $V_1$ represents the volume ($cm^3$) of the heat-swelling resin (E) after the heat-swelling resin (E) is immersed in the electrolyte at 25°C for 24 hours, the electrolyte is then heated to 120°C, and held at 120°C for one hour.

On the other hand, it is desirable that the degree of swelling of the heat-swelling resin (E) defined by Formula (2) above is 10 or less because too large a degree of swelling may cause deformation of the electrochemical device.

The degree of swelling defined by Formula (2) above can be estimated by directly measuring the change in size of the heat-swelling resin (E), for example, using the light-scattering method and image analysis of an image captured with a CCD camera or the like, but can be measured more accurately using, for example, the following method.

Using a binder resin whose degrees of swelling at 25°C and 120°C that are defined as in Formulas (1) and (2) above are known, the heat-swelling resin (E) is mixed with a solution or emulsion of the binder resin to prepare a slurry. This slurry is applied onto a base material, such as a PET sheet and a glass plate, to form a film, and the mass of the film is measured. Next, this film is immersed in an electrolyte at 25°C for 24 hours and the mass of the film is measured. Furthermore, the electrolyte is heated to 120°C and the mass is measured after maintaining the temperature at 120°C for one hour, and the degree of swelling $B_T$ is calculated using Formulas (3) to (9) below. It is assumed that the increase in volume of the components other than the electrolyte during the temperature increase from 25°C to 120°C can be ignored in Formulas (3) to (9) below.

$$V_i = M_i \times W/P_A \qquad (3)$$

$$V_b = (M_0 - M_i)/P_B \qquad (4)$$

$$V_C = M_1/P_C - M_0/P_B \qquad (5)$$

$$V_V = M_i \times (1 - W)/P_V \qquad (6)$$

$$V_0 = V_i + V_b - V_V \times (B_B + 1) \qquad (7)$$

$$V_D = V_V \times (B_B + 1) \tag{8}$$

$$B_T = \{V_0 + V_C - V_D \times (B_C + 1)\}/V_0 - 1 \tag{9}$$

Here, in Formulas (3) to (9) above,

$V_i$: the volume (cm$^3$) of the heat-swelling resin (E) before being immersed in an electrolyte,
$V_0$: the volume (cm$^3$) of the heat-swelling resin (E) after being immersed in the electrolyte at 25°C for 24 hours,
$V_b$: the volume (cm$^3$) of the electrolyte absorbed in the film after being immersed in the electrolyte at room temperature for 24 hours,
$V_C$: the volume (cm$^3$) of the electrolyte absorbed in the film during a period in which the film is immersed in the electrolyte at room temperature for 24 hours, the electrolyte is heated to 120°C, and is held at 120°C for one hour,
$V_V$: the volume (cm$^3$) of the binder resin before being immersed in the electrolyte,
$V_D$: the volume (cm$^3$) of the binder resin after being immersed in the electrolyte at room temperature for 24 hours,
$M_i$: the mass (g) of the film before being immersed in the electrolyte,
$M_0$: the mass (g) of the film after being immersed in the electrolyte at room temperature for 24 hours,
$M_l$: the mass (g) of the film after the film is immersed in the electrolyte at room temperature for 24 hours, then the electrolyte is heated to 120°C, and held at 120°C for one hour,
W: the mass ratio of the heat-swelling resin (E) contained in the film before being immersed in the electrolyte,
$P_A$: the specific gravity (g/cm$^3$) of the heat-swelling resin (E) before being immersed in the electrolyte,
$P_B$: the specific gravity (g/cm$^3$) of the electrolyte at room temperature,
$P_C$: the specific gravity (g/cm$^3$) of the electrolyte at a predetermined temperature,
$P_V$: the specific gravity (g/cm$^3$) of the binder resin before being immersed in the electrolyte,
$B_B$: the degree of swelling of the binder resin after being immersed in the electrolyte at room temperature for 24 hours, and
$B_C$: the degree of swelling of the binder resin defined by Formula (2) above when heated.

Further, with the use of $V_i$ and $V_0$ determined from Formulas (3) and (7) above by the above-described method, the degree of swelling $B_R$ at room temperature can be determined using Formula (1) above.

As with conventionally known electrochemical devices, the electrochemical device of the present invention uses, for example, a solution in which a lithium salt is dissolved in an organic solvent as the non-aqueous electrolyte (the type of the lithium salt and the organic solvent, the concentration of the lithium salt, and other details will be described later). Accordingly, as the heat-swelling resin (E), it is recommended using a resin that starts exhibiting the above-described heat-swelling property upon reaching any temperature in the range from 75 to 125°C in a solution in which a lithium salt is dissolved in an organic solvent, and that can swell such that the degrees of swelling $B_R$ and $B_T$ in the solution preferably satisfy the above-described values.

The heat-swelling resin (E) preferably is a material that has heat resistance and electrical insulation, is stable in electrolytes, and cannot be easily oxidized or reduced in an operating voltage range of batteries and thus is electrochemically stable. An example of such a material is a cross-linked resin. Specific examples include: at least one cross-linked resin selected from the group consisting of styrene resin such as polystyrene (PS), styrene butadiene rubber (SBR), acrylic resin such as polymethylmethacrylate (PMMA), polyalkylene oxide such as polyethylene oxide (PEO), fluorocarbon resin such as polyvinylidene fluoride (PVDF), and derivatives thereof; urea resin; and polyurethane. As the heat-swelling resin (E), the above examples of resin may be used alone or in combination of two or more. Further, the heat-swelling resin (E) may contain various known additives that are added to the resin, including, for example, an antioxidant, as needed.

Among the above-described constituents, it is preferable to use cross-linked styrene resin, cross-linked acrylic resin, and cross-linked fluorocarbon resin, and cross-linked PMMA is particularly preferable.

Although the mechanism with which these cross-linked resins absorb an electrolyte and swell with increasing temperature is not clearly known, it is considered that there is a correlation with glass transition temperature (Tg). Specifically, it seems that, generally, resins become flexible when heated to their Tg, and thus, resins as listed above can absorb a large amount of electrolyte at a temperature higher than or equal to their Tg, and as a result, swell. Accordingly, it is desirable to use, as the heat-swelling resin (E), a cross-linked resin having a Tg of approximately 75 to 125°C, considering the fact that the temperature at which the shutdown effect actually occurs is somewhat higher than the temperature at which the heat-swelling resin (E) starts exhibiting the heat-swelling property. Note that the Tg of a cross-linked resin serving as the heat-swelling resin (E) as used herein is a value measured using a DSC in accordance with JIS K 7121.

The above-described cross-linked resins have a certain degree of reversibility in volume change resulting from temperature change in a so-called dry state before they incorporate an electrolyte. More specifically, the cross-linked resins expand with increasing temperature, but again contract when the temperature is lowered. In addition, they have a heat resistance temperature much higher than the temperature at which the heat-swelling property is exhibited, and therefore, even if the lower limit of the temperature at which the heat-swelling property is exhibited is about 100°C, it is possible to select a material that can be heated to 200°C or higher. Accordingly, the resin will not melt and the heat-swelling property of the resin will not be impaired even when the resins are heated in a separator production process or the like, which facilitates handling in the production process that involves an ordinary heating process.

Although there is no particular limitation with respect to the configuration of the heat-melting resin (B) and the heat-swelling resin (E) (hereinafter, the heat-melting resin (B) and the heat-swelling resin (E) may be collectively referred to as a "shutdown resin"), it is preferable to use those in the form of fine particles. It is sufficient that the particle diameter of the fine particles in a dry state is smaller than the thickness of the separator, and the fine particles preferably have an average particle diameter 1/100 to 1/3 the thickness of the separator. Specifically, the average particle diameter is preferably 0.1 to 20 μm. When the particle diameter of the shutdown resin particles is too small, the gap between the particles is excessively reduced and the ion conduction path is increased, which may degrade the characteristics of the electrochemical device. When the particle diameter of the shutdown resin particles is too large, the gap is increased, which may reduce the effect of improving the resistance to short circuit caused by lithium dendrite and the like. Note that the average particle diameter of the shutdown resin particles can be defined as a number average particle diameter, measured using, for example, a laser diffraction particle size analyzer ("LA-920" manufactured by Horiba, Ltd.) by dispersing the fine particles in a medium (e.g., water) that does not cause swelling of the shutdown resin.

The shutdown resin may have a configuration other than the above-described configurations, and may be present in a state in which it is deposited on the surface of any of the other constituents, including, for example the inorganic fine particles or the fibrous material and thus integrated with the constituent. Specifically, the shutdown resin may be present as particles having a core-shell structure in which the inorganic fine particles serve as the core and the shutdown resin serves as the shell. Alternatively, the shutdown resin may be present as fiber having a multi-layer structure including the shutdown resin on the surface of a core material.

In order to facilitate achieving the shutdown effect, the content of the shutdown resin in the separator is preferably as follows. The volume of the shutdown resin in the entire volume of the components of the separator is preferably 10 vol% or more, more preferably 20 vol% or more. On the other hand, from the viewpoint of ensuring the shape stability of the separator at high temperatures, the volume of the shutdown resin in the entire volume of the components of the separator is preferably 50 vol% or less, more preferably 40 vol% or less.

Accordingly, in the case of including the shutdown resin in the separator forming composition, it is desirable that the amount of the shutdown resin to be added is adjusted such that the content of the shutdown resin satisfies the above values in a produced separator.

In the separator forming composition, the solid content including, for example, the monomer and the oligomer, the polymerization initiator, and the inorganic fine particles (B) added as needed, is preferably 10 to 50 wt%, for example.

In the step (1) of the method of the present invention, a separator forming composition as described above is applied to a base material to form a coating.

For example, an electrode for an electrochemical device (a positive electrode or a negative electrode), a porous substrate, a substrate of a film or metal foil can be used as the base material to which the separator forming composition is applied.

In the case of using an electrode for an electrochemical device as the base material, a separator integrated with the electrode can be produced. In the case of using a porous substrate as the base material, a multi-layer separator made up of a layer formed from the separator forming composition and a layer formed from the porous substrate can be produced. Furthermore, in the case of using a substrate of a film or metal foil as the base material, a separator in the form of an independent film can be formed by separating the produced separator from the substrate.

An example of the porous substrate used as the base material is a porous sheet of a woven fabric made of at least one type of fibrous material including the various constituents as described above or a nonwoven fabric having a structure in which the fibrous material is entangled. Specific examples thereof include paper, a PP nonwoven fabric, polyester nonwoven fabrics (e.g., a PET nonwoven fabric, a PEN nonwoven fabric, and a PBT nonwoven fabric), and a PAN nonwoven fabric.

Microporous films (e.g., a microporous film made of polyolefin such as PE and PP) generally used as separators for electrochemical devices such as non-aqueous electrolyte secondary batteries also can be used as the porous substrate. The use of such a porous substrate can also provide the separator with the shut-down function. Note that such a porous substrate generally has low heat resistance, and may cause short circuit due to contact between the positive electrode and the negative electrode resulting from an increase in the internal temperature of an electrochemical device, for example. However, in the case of the separator produced by the method of the present invention, a layer containing the resin (A) having excellent heat resistance is formed on the surface of such a porous substrate, and this layer can suppress the thermal contraction of the porous substrate. Accordingly it is possible to achieve a separator that can constitute an electrochemical that is excellent in safety.

To apply the separator forming composition to the base material, various known application methods can be used. In the case of using an electrode for an electrochemical device or a porous substrate as the base material, these base materials may be impregnated with the separator forming composition.

In the step (2) of the method of the present invention, a coating of the separator forming composition applied to the base material is irradiated with an energy ray to form the resin (A).

Examples of the energy ray with which a coating of the separator forming composition is irradiated include visible light, ultraviolet rays, radiation, and electron beams. It is more preferable to use visible light or ultraviolet rays because of the higher safety.

It is preferable to appropriately adjust the conditions for irradiation with an energy ray, including, for example, the wavelength, the irradiation strength, and the irradiation time such that the resin (A) can be formed favorably In a specific example of the conditions, the wavelength of the energy ray can be set to 320 to 390 nm, and the irradiation strength can be set to 623 to 1081 mJ/cm$^2$. Note, however, that the conditions for irradiation with an energy ray are not limited to the above-described conditions.

In the step (3) of the method of the present invention, the solvent is removed from the coating of the separator forming composition after irradiation with the energy ray to form pores. The drying conditions (e.g., temperature, time, drying method) may be appropriately selected according to the type of the solvent used for the separator forming composition such that the solvent can be removed favorably. In a specific example of the conditions, the drying temperature can be set to 20 to 80°C, and the drying time can be set to 30 minutes to 24 hours. In addition to air dry, it is possible to use, as the drying method, a method using a constant-temperature bath, a dryer, a hot plate (in the case of directly forming the separator on the electrode surface), or the like. Note, however, that the drying conditions in the step (3) are not limited to the above-described conditions.

In the case of using a substrate of a film or metal foil as the base material, the separator that has been formed through the step (3) is separated from the base material and is used for the production of an electrochemical device, as previously described. On the other hand, in the case of using an electrode or a porous substrate as the base material, the separator (or layer) that has been formed may be used for the production of an electrochemical device without separating the separator (or layer) from the base material.

Alternatively, the separator may be provided with the shutdown resin by forming a layer containing the above-described shutdown resin (e.g., a layer formed only from the shutdown resin, and a layer containing the shutdown resin and a binder) on one side or both sides of the separator that has been produced.

In order to ensure the amount of electrolyte retained and achieve good lithium ion permeability, the porosity of the separator of the present invention in a dry state is preferably 10% or more. On the other hand, from the viewpoint of ensuring the separator strength and preventing internal short circuit, the porosity of the separator in a dry state is preferably 70% or less. The porosity: P (%) of the separator in a dry state can be calculated by obtaining the total sum of components i using Formula (10) below from the thickness, the mass per area, and the density of the components of the separator.

$$P = \{1 - (m/t)/(\Sigma a_i \cdot \rho_i)\} \times 100 \qquad (10)$$

Here, in the above formula, $a_i$: the ratio of component i, taking the mass of the whole as 1, $\rho_i$: the density of the component i (g/cm$^3$), m: the mass per unit area of the separator (g/cm$^2$), and t: the thickness (cm) of the separator.

It is desirable that the separator of the present invention has a Gurley value of 10 to 300 sec in a state in which the resin (B) is dissolved and dried, the Gurley value obtained by a method in accordance with JIS P 8117 and defined as the time (in seconds) during which 100 mL of air permeates through a film under a pressure of 0.879 g/mm$^2$. When the Gurley value is too large, the lithium ion permeability may be decreased. When the Gurley value is too small, on the other hand, the strength of the separator may be reduced. Furthermore, it is desirable that the separator has a strength of 50 g or more, the strength being a penetrating strength obtained using a needle having a diameter of 1 mm. When the penetrating strength is too small, short-circuiting may occur as a result of the separator being penetrated by lithium dendrites when the dendrites are formed. By using the above-described configuration, it is possible to achieve a separator having the Gurley values and penetrating strength described above.

From the viewpoint of separating the positive electrode and the negative electrode more reliably, the thickness of the separator of the present invention is preferably 6 μm or more, more preferably 10 μm or more. On the other hand, when the thickness of the separator is too large, the energy density of a battery using the separator may be reduced. Therefore, the thickness is preferably 50 μm or less, more preferably 30 μm or less.

The electrochemical device of the present invention includes a positive electrode, a negative electrode, a separator, and a non-aqueous electrolyte. As long as the separator is the separator of the present invention, there is no particular limitation with respect to the rest of the configuration and structure, and any of various conventionally known configurations and structures used for electrochemical devices can be used.

The electrochemical device of the present invention encompasses a non-aqueous electrolyte primary battery, a supercapacitor, and the like, in addition to a non-aqueous electrolyte secondary battery, and preferably can be used especially for applications that require safety at high temperatures. The following detailed description is focused on a case where the electrochemical device of the present invention is a non-aqueous electrolyte secondary battery.

Examples of the configuration of the non-aqueous electrolyte secondary battery include a cylindrical form (e.g., rectangular cylindrical form, circular cylindrical form) in which a steel can, an aluminum can or the like is used as an outer can. It is also possible to use a soft package battery in which a laminated film on which a metal is deposited is used as an outer jacket.

There is no particular limitation with respect to the positive electrode, as long as it is a positive electrode used for conventionally known non-aqueous electrolyte secondary batteries, or in other words, a positive electrode containing an active material capable of absorbing and desorbing Li ions. Examples of usable active materials include: lithium-containing transition metal oxides having a layered structure represented by $Li_{1+x}MO_2$ (-0.1< x < 0.1, and M: Co, Ni, Mn, Al, Mg, etc.); lithium manganese oxides having a spinel structure such as $LiMn_2O_4$ and substituted $LMn_2O_4$ in which part of the elements is substituted by another element; and olivine-type compounds represented by $LiMPO_4$ (M: Co, Ni, Mn, Fe, etc.). Specific examples of the lithium-containing transition metal oxides with a layered structure include, in addition to $L_1CoO_2$ and $ENi_{1-x}CO_{x-y}Al_yO_2$ ($0.1 \leq x \leq 0.3$, $0.01 \leq y \leq 0.2$), and oxides containing at least Co, Ni and Mn ($LiMn_{1/3}Ni_{1/3}Co_{1/3}O_2$, $LiMn_{5/12}Ni_{5/12}Co_{1/6}O_2$, $L_iMn_{3/5}Ni_{1/5}Co_{1/5}O_2$, etc.).

A carbon material such as carbon black can be used as the conductivity enhancing agent, and a fluorocarbon resin such as PVDF can be used as the binder. Using a positive electrode material mixture in which these materials are mixed with the active material, a positive electrode active material-containing layer is formed, for example, on a current collector.

For example, a foil, a punched metal, a mesh, and an expanded metal made of metal such as aluminum can be used as the positive electrode current collector. Usually, an aluminum foil having a thickness of 10 to 30 $\mu$m is preferably used.

A positive electrode-side lead portion is usually provided by forming an exposed portion in a current collector by not forming a positive electrode active material-containing layer on a part of the current collector when producing a positive electrode. However, the lead portion does not necessarily need to be integrated with the current collector from the beginning and may be provided by connecting an aluminum foil or the like to the current collector afterward.

There is no particular limitation with respect to the negative electrode, as long as it is a negative electrode used for conventionally known non-aqueous electrolyte secondary batteries, or in other words, a negative electrode containing an active material capable of absorbing and desorbing Li ions. Examples of usable active materials include one of or a mixture of two or more of carbon-based materials capable of absorbing and desorbing lithium, such as graphite, pyrolytic carbon, coke, glassy carbon, fired products of organic polymer compounds, mesocarbon microbeads (MCMB) and carbon fiber. It is also possible to use an element, such as Si, Sn, Ge, Bi, Sb or In, an alloy thereof, a compound capable of being charged and discharged at a low voltage close to that of a lithium metal such as a lithium-containing nitride or an oxide, a lithium metal, or a lithium/aluminum alloy as a negative electrode active material. The negative electrode may be produced in such a manner that a negative electrode material mixture is obtained by adding the conductivity enhancing agent (e.g., a carbon material such as carbon black) or the binder (e.g., PVDF) appropriately to the negative electrode active material, and then formed into a compact (a negative electrode active material-containing layer), with a current collector used as a core material. Alternatively, foils of the lithium metal or various alloys as described above can be used individually or in the form of a laminate with the current collector as the negative electrode.

In the case of using a current collector for the negative electrode, a foil, a punched metal, a mesh, an expanded metal made of copper or nickel, and the like can be used. Usually, a copper foil is used as the current collector. The negative electrode current collector preferably has an upper limit thickness of 30 $\mu$m and desirably has a lower limit thickness of 5 $\mu$m when the thickness of the negative electrode as a whole is reduced to obtain a high energy density battery. A negative electrode-side lead portion can be formed in the same manner as the positive electrode-side lead portion.

A positive electrode and a negative electrode as described above can be used in the form of a laminated electrode group obtained by laminating these electrodes with the separator of the present invention interposed therebetween, or in the form of a wound electrode group obtained by winding them with the separator of the present invention interposed therebetween. Additionally, due to the effect of the resin (A), which is highly flexible, the separator of the present invention also has excellent short circuit resistance when bent. Accordingly, in the electrochemical device of the present invention, which uses this separator, this effect is more prominent in the case of using a wound electrode group that requires changing the shape of the separator. The effect is particularly prominent in the case of using a flat wound electrode group (wound electrode group having a flat transverse section) that requires bending the separator with a strong force.

A solution (non-aqueous electrolyte) in which a lithium salt is dissolved in an organic solvent may be used as the non-aqueous electrolyte. There is no particular limitation with respect to the lithium salt as long as it can dissociate in the solvent into $Li^+$ ion and tend not to cause a side reaction, such as decomposition, in a voltage range where batteries are used. Examples of usable lithium salts include inorganic lithium salts such as $LiClO_4$, $LiPF_6$, $LiBF_4$, $LiAsF_6$, and $LiSbF_6$, and organic lithium salts such as $LiCF_3SO_3$, $LiCF_3CO_2$, $Li_2C_2F_4(So_3)_2$, $LiN(CF_3SO_2)_2$, $LiC(CF_3SO_2)_3$, $LiC_nF_{2n+1}SO_3$ ($2 \leq n \leq 7$), and $LiN(RfOSO_2)_2$ (where Rf is a fluoroalkyl group).

There is no particular limitation with respect to the organic solvent used for the non-aqueous electrolyte as long as the organic solvent dissolves the above-listed lithium salts and does not cause a side reaction such as decomposition in a voltage range where batteries are used. Usable examples of the organic solvent include: cyclic carbonates such as ethylene carbonate, propylene carbonate, butylene carbonate, and vinylene carbonate; chain carbonates such as dimethyl carbonate, diethyl carbonate, and methyl ethyl carbonate; chain esters such as methyl propionate; cyclic esters such as γ-butyrolactone; chain ethers such as dimethoxyethane, diethyl ether, 1,3-dioxolane, diglyme, triglyme, and tetraglyme; cyclic ethers such as dioxane, tetrahydrofuran, and 2-methyltetrahydrofuran; nitriles such as acetonitrile, propionitrile, and methoxy propionitrile; and sulfite esters such as ethylene glycol sulfite. Note that a combination of the materials capable of achieving a high conductivity, including, for example, a mixed solvent of an ethylene carbonate and a chain carbonate is preferred for better characteristics of the battery. For the purpose of improving characteristics such as safety, charge/discharge cycle characteristics and high-temperature storage characteristics, an additive such as vinylene carbonate, 1,3-propane sultone, diphenyl disulfide, cyclohexane, biphenyl, fluorobenzene, or t-butyl benzene can be added to the non-aqueous electrolyte as needed.

The concentration of the lithium salt in the non-aqueous electrolyte is preferably 0.5 to 1.5 mol/L, more preferably 0.9 to 1.3 mol/L.

The above-described non-aqueous electrolyte may also be used in the form of a gel (gel electrolyte) by adding a known gelling agent such as a polymer to the non-aqueous electrolyte.

Hereinafter, the present invention will be described in detail by way of examples. It should be noted, however, that the examples given below are not intended to limit the present invention.

Example 1

Production of Separator

To 11 parts by mass of urethane acrylate serving as an oligomer, 3 parts by mass of dipentoxylated pentaerythritol diacrylate serving as a monomer, 0.4 part by mass of bis(2,4,6-trimethylbenzoyl)phenylphosphine oxide serving as a photoinitiator, 30 parts by mass of boehmite (average particle diameter: 0.6 $\mu$m) serving as the inorganic fine particles (B), and 55 parts by mass of MIBK (SP value: 8.4) serving as a solvent (a), zirconia beads having a diameter of 1 mm was added in an amount as 5 times (on a mass basis) as large as that of boehmite. All were uniformly stirred for 15 hours using a ball mill and then filtrated to prepare a separator forming slurry.

The slurry was applied to a 12-$\mu$m thick non-woven fabric made of PET by dip coating by passing the non-woven fabric through the slurry. Then, the non-woven fabric was passed through a gap having a predetermined space. Subsequently, the non-woven fabric was irradiated with ultraviolet rays having a wavelength of 365 nm at an illuminance of 1081 mW/cm$^2$ for 10 seconds, followed by drying, to yield a separator having a thickness of 20 $\mu$m. The ratio $V_A/V_B$ of the volume $V_A$ of the resin (A) to the volume $V_B$ of the inorganic fine particles (B) in this separator was 1.3.

Production of Positive Electrode

Using N-methyl-2-pyrrolidone (NMP) as a solvent, 90 parts by mass of $LiCoO_2$ serving as a positive electrode active material, 7 parts by mass of acetylene black serving as a conductivity enhancing agent, and 3 parts by mass of PVDF serving as a binder were uniformly mixed to prepare a positive electrode material mixture-containing paste. This paste was applied intermittently onto both sides of a 15-$\mu$m thick aluminum foil, which would serve as a current collector, such that the application length was 280 mm on the front face and 210 mm on the back face, followed by drying. Then, calendering was performed so as to adjust the total thickness of the positive electrode active material-containing layer to 150 $\mu$m, and cutting was performed so as to bring the width thereof to 43 mm. Thus, a positive electrode was produced. Thereafter, a tab was attached to an exposed portion of the aluminum foil of the positive electrode.

Production of Negative Electrode

Using NMP as a solvent, 95 parts by mass of graphite serving as a negative electrode active material and 5 parts by mass of PVDF were uniformly mixed to prepare a negative electrode material mixture-containing paste. This paste was applied intermittently onto both sides of a current collector made of a 10-$\mu$m thick copper foil such that the application length was 290 mm on the front face and 230 mm on the back face, followed by drying. Then, calendering was performed so as to adjust the total thickness of the negative electrode active material-containing layer to 142 $\mu$m, and cutting was performed so as to bring the width thereof to 45 mm. Thus, a negative electrode was produced. Thereafter, a tab was attached to an exposed portion of the copper foil of the negative electrode.

Assembly of Battery

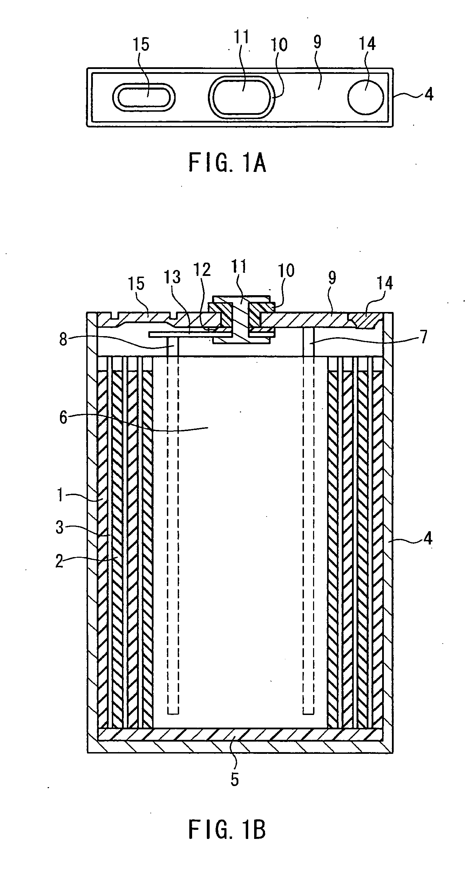

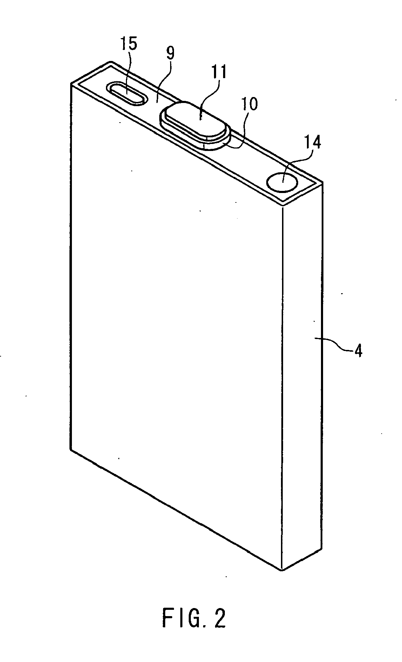

The thus obtained positive electrode and negative electrode were placed upon each other with the above-described separator interposed therebetween, and wound in a spiral fashion to produce a wound electrode group. The obtained wound electrode group was pressed into a flat shape, and placed in an aluminum outer can having a thickness of 4 mm, a height of 50 mm, and a width of 34 mm. An electrolyte (obtained by dissolving $LiPF_6$ at a concentration of 1.2 mol/L in a solvent in which ethylene carbonate and ethyl methyl carbonate were mixed at a volume ratio of 1:2) was injected into the outer can, and then the outer can was sealed. Thus, a prismatic non-aqueous electrolyte secondary battery having the structure shown in FIGS. 1A and 1B and the external appearance shown in FIG. 2 was produced.

The battery shown in FIGS. 1A and 1B, and FIG. 2 will now be described. A positive electrode 1 and a negative electrode 2 are housed in a prismatic outer can 4 together with a non-aqueous electrolyte as a wound electrode group 6, which has been wound in a spiral fashion with a separator 3 interposed therebetween as described above. However, in order to simplify the illustration of FIGS. 1A and 1B, metal foils serving as current collectors and the electrolyte that were used to produce the positive electrode 1 and the negative electrode 2 are not illustrated.

The outer can 4 is made of an aluminum alloy, and constitutes an outer jacket of the battery. The outer can 4 also serves as a positive electrode terminal. An insulator 5 made of a polyethylene sheet is placed on the bottom of the outer can 4, and a positive electrode current collector plate 7 and a negative electrode current collector plate 8 connected to the ends of the positive electrode 1 and the negative electrode 2, respectively, are drawn from the electrode group 6 made up of the positive electrode 1, the negative electrode 2 and the separator 3. A stainless steel terminal 11 is attached to a cover plate 9 made of an aluminum alloy for sealing the opening of the outer can 4 with a polypropylene insulating packing 10 interposed therebetween, and a stainless steel lead plate (electrode terminal current collecting mechanism) 13 is attached to the terminal 11 with an insulator 12 interposed therebetween.

The cover plate 9 is inserted in the opening portion of the outer can 4. By welding the junction of the cover plate 9 and the opening portion, the opening portion of the outer can 4 is sealed and thus the inside of the battery is sealed.

In addition, the cover plate 9 is provided with an injection opening (denoted by Numeral 14 in FIG. 2). The electrolyte is injected into the battery from the injection opening during assembly of the battery, and then the injection opening is sealed. Further, a safety valve 15 for preventing explosion is formed at the cover plate 9.

In the battery of Example 1, the outer can 4 and the cover plate 9 function as a positive electrode terminal by welding the positive electrode current collector plate 7 directly to the cover plate 9, and the terminal 11 functions as a negative electrode terminal by welding the negative electrode current collector plate 8 to a lead plate 13 and conducting the negative electrode current collector plate 8 and the terminal 11 through the lead plate 13. However, depending on the material, etc., of the outer can 4, the positive and the negative may be reversed.

FIG. 2 is a perspective view schematically showing the external appearance of the battery shown in FIGS. 1A and 1B. FIG. 2 is illustrated to indicate that the battery is a prismatic battery. In FIG. 2, the battery is schematically shown and only specific components of the battery are illustrated. Similarly, in FIGS. 1A and 1B, the inner circumferential side of the electrode group is not shown in cross section.

Example 2

A separator forming slurry was prepared in the same manner as in Example 1 except that the amount of urethane acrylate was 8 parts by mass and the amount of dipentoxylated pentaerythritol diacrylate was 5 parts by mass. A 20-$\mu$m thick separator was produced in the same manner as in Example 1 except that this slurry was used. The ratio $V_A/V_B$ of the volume $V_A$ of the resin (A) to the volume $V_B$ of the inorganic fine particles (B) in the separator was 1.2.

Then, a non-aqueous electrolyte secondary battery was produced in the same manner as in Example 1 except that this separator was used.

Example 3

A separator forming slurry was prepared in the same manner as in Example 1 except that the amount of boehmite was 15 parts by mass. A 20-$\mu$m thick separator was produced in the same manner as in Example 1 except that this slurry was used. The ratio $V_A/V_B$ of the volume $V_A$ of the resin (A) to the volume $V_B$ of the inorganic fine particles (B) in this separator was 2.6.

Then, a non-aqueous electrolyte secondary battery was produced in the same manner as in Example 1 except that this separator was used.

Example 4

A separator forming slurry was prepared in the same manner as in Example 1 except that the solvent (a) was changed to butyl acetate (SP value: 8.5). A 22-$\mu$m thick separator was produced in the same manner as in Example 1 except that this slurry was used.

Then, a non-aqueous electrolyte secondary battery was produced in the same manner as in Example 1 except that this separator was used.

Example 5

The same separator forming slurry as that prepared in Example 1 was applied to both sides of the same negative electrode as that produced in Example 1 using a dip coating machine, and all were irradiated with ultraviolet rays having a wavelength of 365 nm at an illuminance of 1081 mW/cm$^2$ for 10 seconds, followed by drying, to give a negative electrode including a 20-$\mu$m thick separator on both sides.

Then, a non-aqueous electrolyte secondary battery was produced in the same manner as in Example 1 except for the use of a flat wound electrode group produced by placing this negative electrode and the same positive electrode as that produced in Example 1 on each other with the separator of the negative electrode disposed therebetween.

Example 6

The same separator forming slurry as that prepared in Example 1 was applied to both sides of the same positive electrode as that produced in Example 1 using a dip coating machine, and all were irradiated with ultraviolet rays having a wavelength of 365 nm at an illuminance of 1081 mW/cm$^2$ for 10 seconds, followed by drying, to give a positive electrode including a 20-$\mu$m thick separator on both sides.

Then, a non-aqueous electrolyte secondary battery was produced in the same manner as in Example 1 except for the use of a flat wound electrode group produced by placing this positive electrode and the same negative electrode as that produced in Example 1 on each other with the separator of the positive electrode disposed therebetween.

Example 7

A separator forming slurry was prepared in the same manner as in Example 1 except that the inorganic fine particles (B) were not added. An 18-$\mu$m thick separator was produced in the same manner as in Example 1 except that this slurry was used.

Then, a non-aqueous electrolyte secondary battery was produced in the same manner as in Example 1 except that this separator was used.

Comparative Example 1

A separator forming slurry was prepared in the same manner as in Example 1 except that ethyl acetate (SP value: 9.1) was used in place of the solvent (a). A21-$\mu$m thick separator was produced in the same manner as in Example 1 except that this slurry was used.

Then, a non-aqueous electrolyte secondary battery was produced in the same manner as in Example 1 except that this separator was used.

Comparative Example 2

A separator forming slurry was prepared in the same manner as in Example 1 except that toluene (SP value: 8.9) was used in place of the solvent (a). A 21-$\mu$m thick separator was produced in the same manner as in Example 1 except that this slurry was used.

Then, a non-aqueous electrolyte secondary battery was produced in the same manner as in Example 1 except that this separator was used.

Comparative Example 3

An attempt was made to prepare a separator forming slurry in the same manner as in Example 1 except that diisobutyl ketone (SP value: 7.8) was used in place of the solvent (a). However, the monomer and the oligomer were not favorably dissolved, and therefore the production of the separator was stopped.

Comparative Example 4

A separator forming slurry was prepared in the same manner as in Example 7 except that ethyl acetate (SP value: 9.1) was used in place of the solvent (a). A15-μm thick separator was produced in the same manner as in Example 7 except that this slurry was used.
Then, a non-aqueous electrolyte secondary battery was produced in the same manner as in Example 1 except that this separator was used.

Comparative Example 5

A non-aqueous electrolyte secondary battery was produced in the same manner as in Example 1 except that a commercially available polyolefin microporous film (with a thickness of 20 μm) was used as the separator.
The uniformity, the Gurley value, and the porosity of the separators used for the non-aqueous electrolyte secondary batteries of Examples 1 to 7 and Comparative Examples 1, 2, 4, and 5 were determined. The uniformity was evaluated by visual inspection, and the Gurley value and the porosity were determined by the methods described above.
Further, the non-aqueous electrolyte secondary batteries of Examples 1 to 7 and Comparative Examples 1, 2, 4, and 5 were subjected to a charge-discharge test and a temperature elevation test for safety evaluation as follows.

Charge-Discharge Test

The batteries of Examples and Comparative Examples were subjected to constant current charging with a current of 0.2 C until the voltage reached 4.2 V, and then subjected to constant voltage charging at 4.2 V The total charging time was 8 hours. The batteries whose current did not decrease to 0.02 C or less at the end of the constant voltage charge was determined to have caused micro-short circuit. The point for the batteries whose voltage did not reach 4.2 V as a result of micro-short circuit was 1.0, the point for the batteries whose current value did not attenuate even though whose voltage reached a voltage of 4.2 V was 0.5, and the point for the batteries whose current value attenuated and whose voltage also reached 4.2 V was 0. The short-circuit rate was determined by dividing the total sum of the points by the numbers of the measured batteries (five batteries each for Examples and Comparative Examples).
Further, each of the batteries (the batteries that did not cause micro-short circuit) after the above-described constant voltage charging was measured for the internal resistance, and then subjected to constant current discharging with a current value of 0.2 C until the voltage reached 2.5 V
Next, each of the discharged batteries was charged under the sam e conditions as described above, then subjected to constant current discharging with a current of 0.2 C until the voltage reached 2.5 V, and the discharge capacity (0.2 C discharge capacity) was determined. Furthermore, each of the batteries whose 0.2 C discharge capacity had been measured was charged under the same conditions described above, then subjected to constant current discharging with a current of 1 C until the voltage reached 2.5 V, and the discharge capacity (1 C discharge capacity) was determined. Then, the value obtained by dividing the 1 C discharge capacity by the 0.2 C discharge capacity was expressed in percentage, and this was determined as the capacity retention rate. The higher the capacity retention rate, the better the load characteristics of the battery.

Temperature Elevation Test

The batteries of Examples and Comparative Examples were charged under the same condition as in the charge-discharge test, and then the batteries were placed in a constant-temperature bath, in which the temperature of the batteries were increased from 30°C to 150°C at a rate of 1°C/min. After the battery temperature reached 150°C, the batteries were further held at 150°C for two hours. The maximum temperature reached by the batteries at that time was checked. Thereafter, each battery was removed from the constant-temperature bath, and allowed to cool at room temperature for 10 hours before the battery voltage was measured.
Table 1 shows the structure and the characteristics of the separators used for the non-aqueous electrolyte secondary batteries of Examples 1 to 7, and Comparative Examples 1, 2, 4, and 5. Table 2 shows the results of evaluation of the non-aqueous electrolyte secondary batteries of Examples 1 to 7, and Comparative Examples 1, 2, 4, and 5.
[Table 1]

|  | Thickness (pm) | Porosity (%) | $V_A/V_B$ | Gurley Value (sec/100 mL) | Uniformity |
|---|---|---|---|---|---|
| Ex. 1 | 20 | 22 | 1.3 | 67 | uniform |
| Ex. 2 | 20 | 28 | 1.2 | 45 | uniform |
| Ex. 3 | 20 | 18 | 2.6 | 150 | uniform |
| Ex. 4 | 22 | 20 | 1.3 | 77 | uniform |
| Ex. 5 | 20 | 19 | 1.3 | unmeasurable (integrated with electrode) | uniform |
| Ex. 6 | 20 | 20 | 1.3 | unmeasurable (integrated with electrode) | uniform |
| Ex. 7 | 18 | 20 | - | 45 | uniform |
| Com. Ex. 1 | 21 | 13 | 1.3 | ∞ | aggregate is present |
| Com. Ex. 2 | 21 | 16 | 1.3 | 450 | aggregate is present |
| Com. Ex. 4 | 15 | 10 | - | ∞ | uniform, transparent |
| Com. Ex. 5 | 20 | 50 | 1.3 | 90 | uniform |

[Table 2]

|  | Internal Resistance (mΩ) | Short-Circuit Rate | Load Characteristics Capacity Retention Rate (%) | Temperature Elevation Zest | |
|---|---|---|---|---|---|
|  |  |  |  | Voltage after Test (V) | Maximum temperature Reached during Test (°C) |
| Ex. 1 | 0.80 | 0 | 88 | 3.7 | 152 |
| Ex. 2 | 0.65 | 0 | 85 | 3.7 | 152 |
| Ex. 3 | 1.10 | 0 | 65 | 3.7 | 153 |
| Ex. 4 | 0.85 | 0 | 85 | 3.7 | 153 |
| Ex. 5 | 0.75 | 0 | 88 | 3.6 | 151 |
| Ex. 6 | 0.75 | 0 | 88 | 3.6 | 151 |
| Ex. 7 | 1.10 | 0 | 80 - | 3.0 | 152 |
| Com. Ex. 1 | 2.4 | 0.2 | 6 | 3.0 | 151 |
| Com. Ex. 2 | 1.10 | 1.0 | - | - | - |
| Com. Ex. 4 | - | - | - | - | - |
| Com. Ex. 5 | 0.50 | 0 | 89 | 0.05 | 160 |

As shown in Tables 1 and 2, the separators of the non-aqueous electrolyte secondary batteries of Examples 1 to 7, for which the solvent (a) having an appropriate SP value was used as the solvent of the separator forming slurry, exhibit high uniformity and also have a low Gurley value, i.e., good air permeability. Therefore, it seems that fine and uniform pores were favorably formed. Accordingly, the non-aqueous electrolyte secondary batteries of Examples 1 to 7, which used these separators, have a low internal resistance, and have a short-circuit rate of 0. They also have a high capacity retention rate in the evaluation of load characteristics, and thus are excellent in reliability. Moreover, no short circuit was observed by the temperature elevation test, and therefore these non-aqueous electrolyte secondary batteries have higher safety than that of the non-aqueous electrolyte secondary battery of Comparative Example 5, for which an ordinary polyolefin microporous film separator was used. The voltages after the temperature elevation test of the non-aqueous electrolyte secondary batteries of Examples 1 to 6, for which the separators containing the inorganic fine particles (B) were used, are maintained at a high level, compared to the non-aqueous electrolyte battery of Example 7, for which the separator that did not contain the inorganic fine particles (B) was used. Therefore, it seems that the separators undergo fewer thermal dimensional changes and the like, and the batteries of Examples 1 to 6 have better safety.

In contrast, a portion including an aggregate was observed in the uniformity evaluation by visual inspection in the separators of the non-aqueous electrolyte secondary batteries of Comparative Examples 1 and 2, for which a solvent having a high SP value was used for the separator forming slurry in place of the solvent (a). Further, these separators have a low porosity and a large Gurley value, i.e., a poor air permeability. The reason for this seems to be that the resin (A) formed by irradiation with ultraviolet rays swells or partly dissolves in the solvent of the separator forming slurry, and as a result, some of the pores were closed. Also, the non-aqueous electrolyte secondary batteries of Comparative Examples 1 and 2, for which such separators were used, have a high internal resistance possibly due to the poor lithium ion permeability of the separators, and lithium dendrites tend to be formed because current is localized in few pores in the separators. Therefore, they have a high short-circuit rate and are inferior in reliability. Note that the short-circuit rate of the battery of Comparative Example 2 during the charge-discharge test was 1, i.e., short circuit was observed in all of the batteries, and therefore, it was impossible to evaluate the load characteristics.

The separator of the non-aqueous electrolyte secondary battery of Comparative Example 4, for which a solvent having a high SP value was used for the separator forming slurry in place of the solvent (a) and the inorganic fine particles (B) were not used, was observed to be uniform by visual inspection. However, the separator was transparent, has a low porosity and a large Gurley value, i.e., a poor air permeability. The reason for this seems to be that the progress of the pore formation was further prohibited because the separator did not contain the inorganic fine particles (B) unlike the separator of Comparative Example 2, in addition to the fact that the resin (A) formed by irradiation with ultraviolet rays swells or partly dissolves in the solvent of the separator forming slurry, and as a result, some of the pores were closed. Also, the battery of Comparative Example 4, which used such a separator, was not able to be charged, and therefore it is impossible to perform all the evaluations.

Example 8

A separator forming slurry was prepared in the same manner as in Example 1 except for the use of 11 parts by mass of urethane acrylate serving as an oligomer, 3 parts by mass of dipentoxylated pentaerythritol diacrylate serving as a monomer, 0.4 part by mass of bis(2,4,6-trimethylbenzoyl)phenylphosphine oxide serving as a photoinitiator, 30 parts by mass of boehmite (average particle diameter: 0.6 $\mu$m) serving as the inorganic fine particles (B), 46.6 parts by mass of methyl decanoate (SP value: 8.0) serving as the solvent (b): and 9 parts by mass of ethyl acetate (SP value: 9.1) serving as the solvent (c). The volume ratio $V_{sc}/V_{sb}$ between the solvent (b) and the solvent (c) was 0.189.

Then, a 20-$\mu$m thick separator was produced in the same manner as in Example 1 except that the above-described slurry was used. A non-aqueous electrolyte secondary battery was produced in the same manner as in Example 1 except that this separator is used. The ratio $V_A/V_B$ of the volume $V_A$ of the resin (A) to the volume $V_B$ of the inorganic fine particles (B) in the above-described separator was 1.3.

Example 9

A separator forming slurry was prepared in the same manner as in Example 8 except that the amount of methyl decanoate serving as the solvent (b) was changed to 41.7 parts by mass and the amount of ethyl acetate serving as the solvent (c) was changed to 13.9 parts by mass. A 20-$\mu$m thick separator was produced in the same manner as in Example 1 except that this slurry was used. Note that volume ratio $V_{sc}/V_{sb}$ between the solvent (b) and the solvent (c) used for the separator forming slurry was 0.32.

Then, a non-aqueous electrolyte secondary battery was produced in the same manner as in Example 1 except that the above-described separator was used.

Example 10

A separator forming slurry was prepared in the same manner as in Example 8 except for the use of 8 parts by mass of urethane acrylate serving as an oligomer, 5 parts by mass of dipentoxylated pentaerythritol diacrylate serving as a monomer, 0.4 part by mass of bis(2,4,6-trimethylbenzoyl)phenylphosphine oxide serving as a photoinitiator, 15 parts by mass of boehmite (average particle diameter: 0.6 $\mu$m) serving as the inorganic fine particles (B), 60.9 parts by mass of methyl decanoate serving as the solvent (b): and 10.7 parts by mass of ethyl acetate serving as the solvent (c). A 15-$\mu$m separator was produced in the same manner as in Example 1 except that this slurry was used. Note that the volume ratio $V_{sc}/V_{sb}$ between the solvent (b) and the solvent (c) used for the separator forming slurry was 0.17, and the ratio $V_A/V_B$ of the volume $V_A$ of the resin (A) and the volume $V_B$ of the inorganic fine particles (B) in the separator was 2.4.

Then, a non-aqueous electrolyte secondary battery was produced in the same manner as in Example 1 except that the above-described separator was used.

Example 11

A separator forming slurry was prepared in the same manner as in Example 8 except that the solvent (b) was changed to diisobutyl ketone (SP value: 7.8) and the solvent (c) was changed to acetone (SP value: 9.8). A 22-μm thick separator was produced in the same manner as in Example 1 except that this slurry was used. Note that the volume ratio $V_{sc}/V_{sb}$ between the solvent (a) and the solvent (b) used for the above-described separator forming slurry was 0.189.

Then, a non-aqueous electrolyte secondary battery was produced in the same manner as in Example 1 except that the above-described separator was used.

Example 12

A separator forming slurry was prepared in the same manner as in Example 8 except that the inorganic fine particles (B) were not added. An 18-μm thick separator was produced in the same manner as in Example 1 except that this slurry was used.

Then, a non-aqueous electrolyte secondary battery was produced in the same manner as in Example 1 except that this separator was used.

Example 13

A negative electrode including a 19-μm thick separator on both sides was obtained in the same manner as in Example 5 except for the use of the same separator forming slurry as that prepared in Example 8. Then, a non-aqueous electrolyte secondary battery was produced in the same manner as in Example 5 except that this negative electrode was used.

Example 14

A positive electrode including a 19-μm thick separator on both sides was obtained in the same manner as in Example 6 except for the use of the same separator forming slurry as that prepared in Example 8. Then, a non-aqueous electrolyte secondary battery was produced in the same manner as in Example 6 except that this positive electrode was used.

The uniformity, the Gurley value, and the porosity of the separators used for the non-aqueous electrolyte secondary batteries of Examples 8 to 14 were determined in the same manner as the separator used for the non-aqueous electrolyte secondary battery of Example 1. Further, the non-aqueous electrolyte secondary batteries of Examples 8 to 14 were subjected to the charge-discharge test and the safety evaluation in the same manner as the non-aqueous electrolyte secondary battery of Example 1 and the like.

Table 3 shows the structure and the characteristics of the separators used for the non-aqueous electrolyte secondary batteries of Examples 8 to 14. Table 4 shows the results of evaluation of the non-aqueous electrolyte secondary batteries of Examples 8 to 14. Note that Table 3 also describes the structure and the characteristics of the separators used for the non-aqueous electrolyte secondary batteries of Comparative Examples 1 and 5, and Table 4 also describes the results of evaluation of the non-aqueous electrolyte secondary batteries of Comparative Examples 1 and 5.

[Table 3]

|  | Thickness (μm) | Porosity (%) | $V_A/V_B$ | Gurley Value (sec/100 mL) | Uniformity |
|---|---|---|---|---|---|
| Ex. 8 | 20 | 22 | 1.3 | 67 | uniform |
| Ex. 9 | 20 | 28 | 1.3 | 45 | uniform |
| Ex. 10 | 15 | 18 | 2.4 | 150 | uniform |
| Ex. 11 | 22 | 20 | 1.3 | 77 | uniform |
| Ex. 12 | 18 | 20 | - | 44 | uniform |

(continued)

|  | Thickness (μm) | Porosity (%) | $V_A/V_B$ | Gurley Value (sec/100 mL) | Uniformity |
|---|---|---|---|---|---|
| Ex. 13 | 19 | 20 | 1.3 | unmeasurable (integrated with electrode) | uniform |
| Ex. 14 | 19 | 20 | 1.3 | unmeasurable (integrated with electrode) | uniform |
| Com. Ex. 1 | 21 | 13 | 1.3 | ∞ | aggregate is present |
| Com. Ex. 5 | 20 | 50 | 1.3 | 90 | uniform |

[Table 4]

|  | Internal Resistance (mΩ) | Short-Circuit Rate | Load Characteristics Capacity Retention Rate (%) | Temperature Elevation Test | |
|---|---|---|---|---|---|
|  |  |  |  | Voltage after Test (V) | Maximum temperature Reached during Test (°C) |
| Ex. 8 | 0.78 | 0 | 88 | 3.8 | 152 |
| Ex. 9 | 1.10 | 0 | 85 | 3.8 | 151 |
| Ex. 10 | 0.65 | 0 | 89 | 3.7 | 153 |
| Ex. 11 | 0.85 | 0 | 85 | 3.7 | 152 |
| Ex. 12 | 0.90 | 0 | 82 | 3.0 | 152 |
| Ex. 13 | 0.72 | 0 | 88 | 3.6 | 151 |
| Ex. 14 | 0.70 | 0 | 88 | 3.6 | 151 |
| Com. Ex. 1 | 2.4 | 0.2 | 6 | 3.0 | 151 |
| Com. Ex. 5 | 0.50 | 0 | 89 | 0.05 | 160 |

As shown in Tables 3 and 4, the separators of the non-aqueous electrolyte secondary batteries of Examples 8 to 14, for which the solvent (b) and the solvent (c) having an appropriate SP value were used in combination as the solvent of the separator forming slurry, exhibit high uniformity and have a low Gurley value, i.e., a good air permeability, and therefore, it seems that fine and uniform pores are favorably formed. Accordingly, the non-aqueous electrolyte secondary batteries of Examples 8 to 14, which used such separators, have low internal resistance and also a short-circuit rate of 0. Furthermore, they have a high capacity retention rate in the evaluation of the load characteristics, and are excellent in reliability. Moreover, as compared to the non-aqueous electrolyte secondary battery of Comparative Example 5, for which an ordinary polyolefin microporous film separator was used, an improvement was also observed with regard to short circuiting in the temperature elevation test, and therefore the batteries of Examples 8 to 14 have high safety. In the case of the non-aqueous electrolyte secondary batteries of Examples 8 to 11, 13, and 14, for which the separators containing the inorganic fine particles (B) were used, the battery voltage after the temperature elevation test is maintained at a high level, as compared to the non-aqueous electrolyte battery of Example 12, for which the separator that did not contain the inorganic fine particles (B) was used. Accordingly, it seems that the separators experience fewer thermal dimensional changes, and therefore, these batteries have better safety.

The invention may be embodied in other forms without departing from the spirit or essential characteristics thereof The embodiments disclosed in this application are to be considered in all respects as illustrative and not limiting. The scope of the invention is indicated by the appended claims rather than by the foregoing description, and all changes which come within the meaning and range of equivalency of the claims are intended to be embraced therein.

**Claims**

1.  A method for producing a separator for an electrochemical device, comprising the steps of
    applying, to a base material, a separator forming composition containing at least: at least one of a monomer and an oligomer that are polymerizable by irradiation with an energy ray; and a solvent (a) having a solubility parameter of 8.1 or more and less than 8.9;
    irradiating a coating of the separator forming composition applied to the base material with the energy ray to form a resin (A) having a cross-linked structure; and
    drying the coating of the separator forming composition after irradiation with the energy ray to form pores.

2.  A method for producing a separator for an electrochemical device, comprising the steps of
    applying, to a base material, a separator forming composition containing at least: at least one of a monomer and an oligomer that are polymerizable by irradiation with an energy ray; a solvent (b) having a solubility parameter of 7 or more and 8 or less; and a solvent (c) having a solubility parameter of 8.9 or more and 9.9 or less;
    irradiating a coating of the separator forming composition applied to the base material with the energy ray to form a resin (A) having a cross-linked structure; and
    drying the coating of the separator forming composition after irradiation with the energy ray to form pores.

3.  The method for producing a separator for an electrochemical device according to claim 2, wherein a ratio $V_{sc}/V_{sb}$ of a volume $V_{sb}$ of the solvent (b) to a volume $V_{sc}$ of the solvent (c) is 0.05 to 0.7.

4.  The method for producing a separator for an electrochemical device according to any one of claims 1 to 3, wherein the separator forming composition further containing inorganic fine particles (B) is used.

5.  The method for producing a separator for an electrochemical device according to claim 4, wherein the inorganic fine particles (B) are alumina, titania, silica, or boehmite.

6.  The method for producing a separator for an electrochemical device according to any one of claims 1 to 5, wherein the separator forming composition further containing a fibrous material (C) is used.

7.  The method for producing a separator for an electrochemical device according to any one of claims 1 to 6, wherein the separator forming composition further containing at least one of a resin (D) having a melting point of 80 to 140°C and a resin (E) that swells by absorbing a liquid non-aqueous electrolyte when heated and whose degree of swelling increases with increasing temperature is used.

8.  A separator for an electrochemical device, produced by the method for producing a separator for an electrochemical device according to any one of claims 1 to 7.

9.  A separator for an electrochemical device, produced by the method for producing a separator for an electrochemical device according to claim 4 or 5, wherein a ratio $V_A/V_B$ of a volume $V_A$ of the resin (A) to a volume $V_B$ of the inorganic fine particles (B) is 0.6 to 9.

10. An electrochemical device comprising a positive electrode, a negative electrode, a separator, and a non-aqueous electrolyte, wherein the separator is the separator for an electrochemical device according to claim 8 or 9.

11. The electrochemical device according to claim 10, wherein the separator is integrated with at least one of the positive electrode and the negative electrode.

FIG. 1A

FIG. 1B

FIG. 2

Europäisches
Patentamt

European
Patent Office

Office européen
des brevets

# EUROPEAN SEARCH REPORT

Application Number

EP 12 00 1646

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Hans-Joachim Streitberger: "Löslichkeitsparameter", Roempp Online, RD-12-01482, July 2007 (2007-07), XP002680823, Retrieved from the Internet: URL:http://www.reompp.com [retrieved on 2012-07-25] * the whole document * | 1-11 | INV. H01M2/16 H01M2/14 |
| X | US 3 427 206 A (SCARDAVILLE PAUL ET AL) 11 February 1969 (1969-02-11) * column 1, line 13 - line 20 * * column 3, line 31 - line 72 * * examples 2,4,5,7 * | 1-3,6-8, 10,11 | |
| X | US 4 230 549 A (D AGOSTINO VINCENT F ET AL) 28 October 1980 (1980-10-28) * column 1, line 66 - column 2, line 10 * * column 2, line 19 - column 3, line 4 * * column 3, line 56 - line 59 * | 1-3,6-8, 10,11 | |
| X | US 6 632 561 B1 (BAUER STEPHAN [DE] ET AL) 14 October 2003 (2003-10-14) * column 2, line 24 - line 49 * * column 3, line 25 - line 49 * * column 4, line 52 - line 54 * * column 5, line 4 - column 21, line 53 * * column 21, line 53 - column 25, line 8 * * column 26, line 24 - column 27, line 9 * * examples 1,5 * | 1-11 | TECHNICAL FIELDS SEARCHED (IPC) H01M |

The present search report has been drawn up for all claims

| Place of search | Date of completion of the search | Examiner |
|---|---|---|
| Munich | 28 November 2012 | Götz, Heide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 12 00 1646

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2012

| Patent document cited in search report | | Publication date | Patent family member(s) | | Publication date |
|---|---|---|---|---|---|
| US 3427206 | A | 11-02-1969 | NONE | | |
| US 4230549 | A | 28-10-1980 | JP | 54039833 A | 27-03-1979 |
| | | | JP | 59024491 B | 09-06-1984 |
| | | | US | 4230549 A | 28-10-1980 |
| US 6632561 | B1 | 14-10-2003 | AU | 1268900 A | 22-05-2000 |
| | | | BR | 9915069 A | 17-07-2001 |
| | | | CA | 2348917 A1 | 11-05-2000 |
| | | | CN | 1331843 A | 16-01-2002 |
| | | | DE | 19850826 A1 | 11-05-2000 |
| | | | EP | 1138092 A1 | 04-10-2001 |
| | | | ES | 2184511 T3 | 01-04-2003 |
| | | | JP | 2002529891 A | 10-09-2002 |
| | | | TW | 457738 B | 01-10-2001 |
| | | | US | 6632561 B1 | 14-10-2003 |
| | | | WO | 0026977 A1 | 11-05-2000 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5335005 A
- JP 2000306568 A
- JP 9259856 A
- JP 11040130 A